**Europäisches Patentamt**

**European Patent Office**

**Office européen des brevets**

(19)

(11) Publication number : **0 306 279 B1**

# EUROPEAN PATENT SPECIFICATION

(12)

(45) Date of publication of patent specification :
18.03.92 Bulletin 92/12

(51) Int. Cl.⁵ : **B60T 11/20**

(21) Application number : **88308037.6**

(22) Date of filing : **31.08.88**

(54) **Master Cylinder.**

(30) Priority : **01.09.87 GB 8720529**

(43) Date of publication of application :
**08.03.89 Bulletin 89/10**

(45) Publication of the grant of the patent :
**18.03.92 Bulletin 92/12**

(84) Designated Contracting States :
**DE ES FR GB IT**

(56) References cited :
**EP-A- 0 046 339**
**EP-A- 0 065 891**
**GB-A- 2 131 902**
**GB-A- 2 137 295**
**US-A- 4 516 748**

(73) Proprietor : **LUCAS INDUSTRIES public limited company**
**Kings Road**
**Tyseley Birmingham B11 2AH (GB)**

(72) Inventor : **Cunningham, Philip**
**21, Cwm Cwddy Drive Rhiwderin**
**Newport Gwent (GB)**

(74) Representative : **Lerwill, John et al**
**A.A. Thornton & Co. Northumberland House**
**303-306 High Holborn**
**London, WC1V 7LE (GB)**

## Description

This invention relates to master cylinders and especially, but not necessarily exclusively, master cylinders for vehicle braking systems. More particularly, the invention is concerned with a master cylinder comprising a generally cylindrical body with an open rear end, external flange means on the body, and a member assembled with the body for defining a passageway arranged to communicate with a reservoir located forwardly of the flange means, and with a pressure chamber of the master cylinder at a position rearwardly of the flange means, said member including a sleeve portion sealed to the body and to an actuating rod projecting rearwardly thereof for closing the open end of the body.

Master cylinders of the foregoing construction are known for example from EP-A-0046339, GB-A-2131902 and GB-A-2137295. For ease of assembly the sleeve members, or caps as they may be called, of these master cylinders are designed to be slid axially over the rear ends of the master cylinder bodies. To prevent the sleeve members sliding back from their correctly assembled positions special steps must be taken, for example by arranging a wall on which the master cylinder is mounted to engage the sleeve member and fix it in position. This arrangement has the disadvantage that the sleeve member is only secured after the master cylinder is installed, so that some temporary measures may be necessary for maintaining the master cylinder in its assembled condition from the time of manufacture until it is properly mounted, e.g. in a vehicle. As an alternative method of securing the sleeve member GB-A-2131902 proposes the use of a securing element adapted to act between the body and the sleeve member to fix the latter against rearward displacement. According to one proposal that has proved successful in practice, the securing element comprises a collar received in a groove in the body and having forwardly inclined teeth which engage and grip the sleeve member. The disadvantages of this device are that the toothed collar is an additional component which is relatively expensive to produce, resulting in increased manufacturing costs, and the sleeve member cannot easily be removed such as for servicing or repair of the master cylinder, without becoming damaged. Consequently, servicing operations, etc. tend to be more expensive due to the need to provide a replacement sleeve member even though that replaced was in good condition until removed.

The sleeve member of the master cylinder disclosed in GB-A-2137295 is provided with projections spaced apart around its inner periphery and adapted to engage in an annular groove provided in the outer wall of the master cylinder body. This construction avoids the disadvantage of an additional component, but it is still a drawback that it is extremely difficult, if not impossible for the sleeve member to be removed without suffering damage. Moreover, the need to provide the internal projections is an inconvenience during manufacture of the sleeve member by moulding. The provision of the annular groove involves an additional machining operation on the body, and the projections hinder the assembly of the sleeve member by sliding it onto the body.

The present invention aims to provide a master cylinder which allows the above disadvantages to be obviated, and provided in accordance therewith is a master cylinder comprising a generally cylindrical body open at the rear end thereof, a flange on the body, and a member assembled with the body and providing a passage extending from one side to the other side of the flange for communicating a reservoir located forwardly of the flange with a pressure chamber of the master cylinder, said member including a sleeve portion sealed to the body and to a rearwardly projecting actuating rod for closing the rear end of the body, and at least one integral locking projection for securing the sleeve portion axially relative to the body, characterised in that said locking projection is external of the sleeve portion and has a snap engagement with the flange obtained by axial sliding assembly of the sleeve member with the body.

The sleeve member, which is conveniently made as a plastics moulding can be manufactured with integral external locking projections without inconvenience or significantly increasing manufacturing costs. The projections can readily be arranged to be disengageable from the flange means to permit detachment of the sleeve member without risk of damage so that this component can be re-used.

In an especially convenient embodiment the sleeve is provided with locking projections in the in the form of forwardly extending fingers which pass through holes in the flange. The ends of the fingers are barbed for locking engagement with flange, and the fingers have inclined faces for camming engagement with the edges of the holes in the flange for defecting the fingers resiliently so the barbs pass through the holes, whereby the snap action is obtained automatically by pushing the sleeve member on to the body.

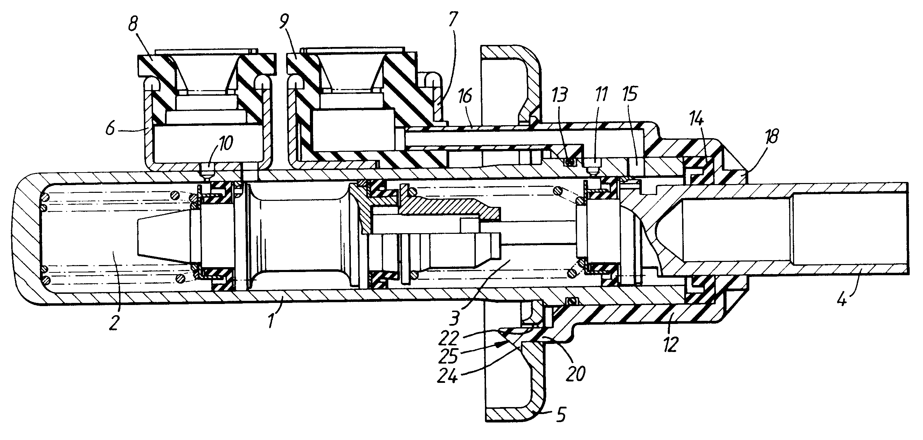

To assist a clear understanding of the invention an embodiment will now be described in detail, reference being made to the the accompanying drawing which shows the master cylinder in axial cross-section.

The illustrated master cylinder has a cylindrical body 1 which is closed at its forward end and open at its rear end. A piston assembly is received in the bore of the body and confines with the body a pair of pressure chambers 2, 3. A piston stem 4 projects through the open rear end of the body and serves as an actuating rod for the master cylinder.

The body 1 is fitted with a flange plate 5 positioned against a forwardly facing shoulder formed on the body, and a pair of reservoir connection fittings 6, 7 for mounting a reservoir housing (not shown) on the body in front of the flange 5. The fittings 6, 7 receive sealing members 8, 9 for cooperation with respective connection spigots of the reservoir housing. A port 10 is formed in the body 1 for connecting the forward pressure chamber 2 with a first reservoir chamber via the fitting 6. Another port 11 is provided in the body to the rear of the flange 5 for connecting the rear pressure chamber 3 with a second reservoir chamber via the fitting 7, communication between the port 11 and reservoir fitting 7 being provided by a passage defined by moulded plastics sleeve member or cap 12 mounted over the rear end of the body 1. Adjacent its forward and rear ends the cap is sealed to the body 1 and to the piston stem 4 by seals 13, 14 respectively. The cap has an internal groove which registers with the port 11, and with a recuperation port 15 also provided in the body, and an integral tube 16 which projects forwardly, passes through the flange 5 and enters the sealing member 9 in the reservoir fitting 7. The central duct of the tube and the groove form the passage connecting the port 11 and the second reservoir chamber. The rear end of the cap has an integral cylindrical bearing portion 18 which serves to guide the piston stem 4 for axial movement. To retain the cap 12 in its correctly assembled position on the master cylinder body a locking arrangement is provided and comprises a plurality of locking fingers 20 integral with the cap 12 and projecting forwardly therefrom. For example, there may be three evenly spaced locking fingers although only one can be seen in the drawing. Each finger 20 extends through a respective hole 22 provided in the flange plate 5, and has a barb 24 at the free end thereof adapted to engage behind the flange plate, thereby to lock the cap 12 securely against disengagement from the body. The finger barb defines an inclined leading cam face 25 arranged to cooperate with the edge of the hole 22 to deflect the finger resiliently as it enters and passes through the hole so that the barb automatically engages behind the flange with a snap action as it clears the hole.

From the foregoing it will be understood that assembly of the integrally moulded plastics cap 12 on body 1 is a simple matter of aligning the tube 16 and and fingers 20 with the corresponding flange openings and then pushing the cap axially into place. The locking fingers automatically engage the flange plate with a snap action to ensure retention of the cap, and the end of tube 16 enters the sealing member 9. Removal of the cap is equally simple. The ends of the fingers 20 are pressed inwardly to disengage their barbs from the flange and the cap is then withdrawn axially from the body. The cap remains undamaged during removal and can be re-used if required.

Of course, if it were desired that the master cylinder should be a non-serviceable unit the barbed ends of the fingers 20 could be permanently deformed after mounting the cap 12, e.g. by ultrasonic action or otherwise so that the cap cannot be easily detached.

## Claims

1. A master cylinder comprising a generally cylindrical body (1) open at the rear end thereof, a flange (5) on the body, and a member (12) assembled with the body and providing a passage extending from one side to the other side of the flange for communicating a reservoir located forwardly of the flange with a pressure chamber (3) of the master cylinder, said member (12) including a sleeve portion sealed to the body and to a rearwardly projecting actuating rod (4) for closing the rear end of the body, and at least one integral locking projection (20) for securing the sleeve portion axially relative to the body, characterised in that said locking projection (20) is external of the sleeve portion and has a snap engagement with the flange obtained by axial sliding assembly of the sleeve member (12) with the body (1).

2. A master cylinder according to claim 1, wherein the locking projection comprises a finger (20) extending forwardly from the sleeve portion.

3. A master cylinder according to claim 2, wherein the finger (20) has a barb (24) for engaging the side of the flange remote from the sleeve portion.

4. A master cylinder according to claim 3, wherein the barb (24) has an inclined face (25) for camming cooperation with an edge of the flange to deflect the finger resiliently as the barb moves forwardly past the flange.

5. A master cylinder according to claim 4, wherein the flange has an opening (22), and the finger is inserted through the opening, the face (25) of the barb cooperating with the edge of the opening.

6. A master cylinder according to any one of claims 2 to 5, wherein the flange has an opening (25), the finger (20) is inserted through the opening, and the free end of the finger is permanently deformed to prevent return movement thereof through the opening.

7. A master cylinder according to any one of claims 1 to 6, wherein the flange (5) is a separate part mounted on the body (1) and is held in axial abutment with a shoulder on the body by said sleeve member (12).

## Patentansprüche

1. Hauptzylinder mit einem im wesentlichen zylindrischen, an seinem hinteren Ende offenen Hauptteil (1), einem Flansch (5) am Hauptteil und einem Bauteil (12), das mit dem Hauptteil zusammengebaut ist und einen Durchlaß zwischen den beiden Seiten des Flansches zur Verbindung eines vor dem Flansch angeordneten Behälters mit einer Druckkammer (3) des Hauptzylinders herstellt, wobei das Bauteil (12) einen gegen das Hauptteil und eine nach hinten sich erstreckende Betätigungstange (4) abdichtenden Hülsenabschnitt aufweist, um das hintere Ende des Hauptteils zu verschließen, und wenigstens einen mit ihm fest bzw. einstückig verbundenen Verriegelungsansatz (20) zum Befestigen des Hülsenabschnitts in axialer Richtung am Hauptteil, dadurch gekennzeichnet, daß der Verriegelungsansatz (20) sich auf der Außenseite des Hülsenabschnitts befindet und mit dem Flansch eine Rastverbindung hat, die durch axial schiebendes Zusammenfügen des Hülsenteils (12) und des Hauptteils (1) zustande kommt.

2. Hauptzylinder nach Anspruch 1, bei dem der Verriegelungsansatz einen Finger (20) aufweist, der sich vom Hülsenteil nach vorn erstreckt.

3. Hauptzylinder nach Anspruch 3, bei dem der Finger (20) einen Widerhaken (24) aufweist, der an der dem Hülsenabschnitt abgewandten Seite des Flansches anzugreifen vermag.

4. Hauptzylinder nach Anspruch 3, bei dem der Widerhaken (24) eine Schrägfläche (25) aufweist, die wie eine Nocke mit einer Kante des Flansches so zusammenzuwirken vermag, daß beim Vorwärtsbewegen des Widerhakens am Flansch vorbei der Finger elastisch abgebogen wird.

5. Hauptzylinder nach Anspruch 4, bei dem der Flansch eine Öffnung (22) aufweist und der Finger durch die Öffnung eingeführt wird, wobei die Schrägfläche (25) des Widerhakens mit dem Rand der Öffnung zusammenwirkt.

6. Hauptzylinder nach einem der Ansprüche 2 bis 5, bei dem der Flansch eine Öffnung (22) aufweist, der Finger (20) durch die Öffnung eingeführt wird, und das freie Ende des Fingers bleibend verformt wird, um seine Rückbewegung durch die Öffnung zu verhindern.

7. Hauptzylinder nach einem der Ansprüche 1 bis 6, bei dem der Flansch (5) ein am Hauptteil (1) montiertes getrenntes Bauteil ist und durch das Hülsenteil (12) an einer Schulter am Hauptteil in axialer Anlage gehalten ist.

**Revendications**

1. Maître-cylindre comportant un corps (1) de forme générale cylindrique, ouvert à son extrémité arrière, un flasque (5) sur le corps, et un élément (12) assemblé avec le corps et fournissant un passage qui va d'un côté du flasque à l'autre pour faire communiquer un réservoir, situé en avant du flasque, avec une chambre de pression (3) du maître-cylindre, ledit élément (12) comprenant une portion constituant un manchon, rendue étanche par rapport au corps et par rapport à une tige de manoeuvre (4) qui dépasse vers l'arrière, pour fermer l'extrémité arrière du corps, et au moins une saillie de verrouillage (20), d'une pièce avec lui, pour fixer axialement la portion constituant le manchon par rapport au corps, maître-cylindre caractérisé par le fait que ladite saillie de verrouillage (20) est l'extérieur de la portion constituant le manchon et donne avec le flasque une prise obtenue, par déformation élastique, en faisant coulisser axialement l'ensemble de l'élément constituant le manchon (12) sur le corps (1).

2. Maître-cylindre selon la revendication 1, dans lequel la saillie de verrouillage est constituée d'un doigt (20) qui s'étend vers l'avant, depuis la portion constituant le manchon.

3. Maître-cylindre selon la revendication 2, dans lequel le doigt (20) présente une griffe (24) pour venir en prise avec le côté du flasque opposé à la portion constituant le manchon

4. Maître-cylindre selon la revendication 3, dans lequel la griffe (24) présente une face inclinée (25) pour coopérer, à la façon d'une came, avec un bord du flasque pour faire élastiquement fléchir le doigt lorsque la griffe, en allant vers l'avant, passe au niveau du flasque.

5. Maître-cylindre selon la revendication 4, dans lequel le flasque présente une ouverture (22) et dans lequel on introduit le doigt dans l'ouverture, la face (25) de la griffe coopérant avec le bord de l'ouverture.

6. Maître-cylindre selon l'une quelconque des revendications 2 à 5, dans lequel le flasque présente une ouverture (22), dans lequel on introduit le doigt (20) par l'ouverture et dans lequel l'extrémité libre du doigt se déforme de façon permanente pour empêcher son mouvement de retour à travers l'ouverture.

7. Maître-cylindre selon l'une quelconque des revendications 1 à 6, dans lequel le flasque (5) est une partie distincte montée sur le corps (1) et est maintenu en butée axiale avec un épaulement prévu sur le corps par ledit élément constituant le manchon (12).